# EUROPÄISCHE PATENTSCHRIFT

(11) **EP 2 792 512 B1**
(45) Veröffentlichungstag und Bekanntmachung des Hinweises auf die Patenterteilung: **03.02.2016**
(21) Anmeldenummer: 14164582.0
(22) Anmeldetag: 14.04.2014
(51) Int. Cl.: B60D 1/06, B60D 1/60

(54) **Kugelkopfkupplung**
Ball coupling
Accouplement à rotule

(30) Priorität: 18.04.2013 DE 202013101675 U
(43) Veröffentlichungstag der Anmeldung: 22.10.2014
(73) Patentinhaber: Gebr. Vitte GmbH & Co., 58339 Breckerfeld (DE)
(72) Erfinder: WINTERHOFF, Ulrich, 58339 Breckerfeld (DE)
(74) Vertreter: Dantz, Jan Henning

(56) Entgegenhaltungen:
- EP-A1- 0 369 625
- EP-A1- 0 370 225
- EP-A1- 0 628 436
- DE-U1- 20 105 008
- DE-U1- 20 212 119
- DE-U1- 29 900 738
- DE-U1-202005 011 444
- US-A1- 2007 175 246

## Beschreibung

Die Erfindung betrifft eine Kugelkopfkupplung nach dem Oberbegriff des Anspruchs 1.

Eine derartige Kugelkopfkupplung ist in der DE 299 00 738 U1 geoffenbart.

Darin wird vorgeschlagen, zur Sicherung eines Anhängers, insbesondere zum Schutz vor Diebstahl, die Betätigung einer mit einer Anhängerdeichsel verbundenen Kugelkopfkupplung durch ein Steckschloss zu blockieren, das in Funktionsstellung im vorderen Bereich des Handgriffs senkrecht zur Längsachse des Kupplungsgehäuses angeordnet ist und mit einem Schließbolzen an der Oberseite des Kupplungsgehäuses anliegt, so dass der Handgriff nicht mehr bewegbar ist.

Eine im Kupplungsgehäuse angeordnete Kugelpfanne, die bei abgeschwenkter Stellung des Handgriffs geschlossen ist, bleibt somit geschlossen, sowohl in angekuppelter wie entkuppelter Stellung des Anhängers.

Prinzipiell hat sich diese Konstruktion bewährt. Allerdings muss zur Funktion, also zum Blockieren, das Steckschloss in seiner Gesamtheit eingesetzt und bei Nichtgebrauch entfernt werden, d.h., das Steckschloss, einschließlich des Zylindergehäuses, des Zylinderkerns, des Schließbolzens sowie des Schlüssels ist als separate Einheit mitzuführen bzw. aufzubewahren.

Naturgemäß besteht dabei die Gefahr des Verlustes oder des Verlegens, so dass nicht nur eine Ersatzbeschaffung erforderlich ist, sondern unter Umständen gerade dann, wenn eine Sicherung erforderlich ist, diese nicht möglich ist.

Die bekannte Kugelkopfkupplung bzw. das Kupplungsgehäuse und der Handgriff sind aus Blech hergestellt, wobei am Handgriff, dem Steckschloss zugeordnet, ein Sicherungszapfen angeschweißt ist.

Wie sich gezeigt hat, ist die bekannte Anordnung des Steckschlosses nur ungenügend geeignet, in einer Kugelkopfkupplung Verwendung zu finden, bei der das Kupplungsgehäuse und der Handgriff als Gussteile ausgebildet sind, zumal die Platzierung des Steckschlosses in der bekannten Art bei einem Handgriff aus Guss insofern schwierig ist als relativ enge Platzverhältnisse vorherrschen.

Im Übrigen ist das Steckschloss bei Gebrauch relativ frei zugänglich, so dass die Gefahr einer mutwilligen Zerstörung durchaus gegeben ist.

Der Erfindung liegt die Aufgabe zugrunde, eine Kugelkopfkupplung der gattungsgemäßen Art so weiterzuentwickeln, dass ihre Funktionssicherheit, insbesondere ihre Sicherung dauerhaft möglich ist und ihre Verwendungsfähigkeit verbessert wird.

Diese Aufgabe wird durch eine Kugelkopfkupplung mit den Merkmalen des Anspruchs 1 gelöst.

Durch die Erfindung ist der Schließbolzen in Funktion innerhalb des Kupplungsgehäuses angeordnet, wodurch eine mutwillige Zerstörung zumindest erschwert wird, was naturgemäß eine verbesserte Sicherung mit sich bringt.

Bevorzugt ist das Steckschloss unverlierbar in der Bohrung des Handgriffs gehalten, beispielsweise dadurch, dass das Schlossgehäuse in die Bohrung eingepresst ist. Auch andere Befestigungsmöglichkeiten sind denkbar, wie Verstiften, Verstemmen oder dergleichen.

Dabei ist die Länge der Bohrung so bemessen, dass das Steckschloss zumindest außenseitig, also dem Schließbolzen abgewandt bündig mit der die Bohrung begrenzenden umfänglichen Wand abschließt. Hierdurch wird vermieden, dass sich Schmutz ansammelt. Jedoch besteht auch die Möglichkeit, bei abgezogenem Schlüssel die sozusagen offene Seite des Steckschlosses mit einer Kappe abzudecken, die im Übrigen ebenfalls unverlierbar am Handgriff befestigt ist.

Im Gegensatz zum Stand der Technik, bei dem, wie erwähnt, das Steckschloss bei Nichtgebrauch entfernt werden muss, bleibt dies bei der neuen Kugelkopfkupplung in jedem Fall im Handgriff positioniert, wobei in einer Nichtblockierstellung auch der Schlüssel im Steckschloss gehalten werden kann. Erst nach einer Betätigung des Steckschlosses derart, dass der Schließbolzen die Schwenkbewegung des Handgriffs gegenüber dem Querbolzen verhindert, wird der Schlüssel aus dem Steckschloss entfernt.

In Schließstellung liegt der Schließbolzen auf der der Kugelpfanne gegenüberliegenden Seite des Querbolzens an, so dass eine Relativbewegung des Querbolzens in den Langlöchern des Handgriffs zum Verschwenken ausgeschlossen ist.

Neben den genannten Funktionsvorteilen zeichnet sich die Erfindung auch dadurch aus, dass sie zumindest kostenneutral mit sehr geringem Fertigungsaufwand zu realisieren ist.

So ist, wenn der Handgriff aus Gusseisen besteht, lediglich die Bohrung mit einzugießen, wobei diese Bohrung als Stufenbohrung ausgebildet ist, bei der der kleinere lichte Durchmesser auf der dem Querbolzen zugewandten Seite einen Durchtritt für den Schließbolzen bildet, während das Schlossgehäuse am Grund der Abstufung anliegt.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:

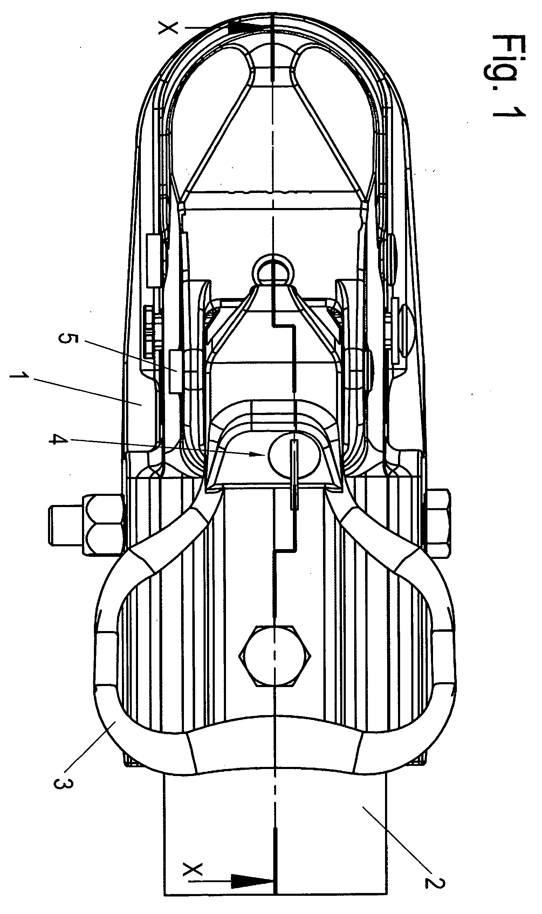

- Figur 1: eine erfindungsgemäße Kugelkopfkupplung in einer Draufsicht
- Figuren 2 und 3: jeweils einen Schnitt durch die Kugelkopfkupplung gemäß der Linie X-X in Figur 1, in unterschiedlichen Funktionsstellungen.

In den Figuren ist eine Kugelkopfkupplung dargestellt, die mit einer Anhängerdeichsel 2 eines nicht gezeigten Anhängers verbunden ist.

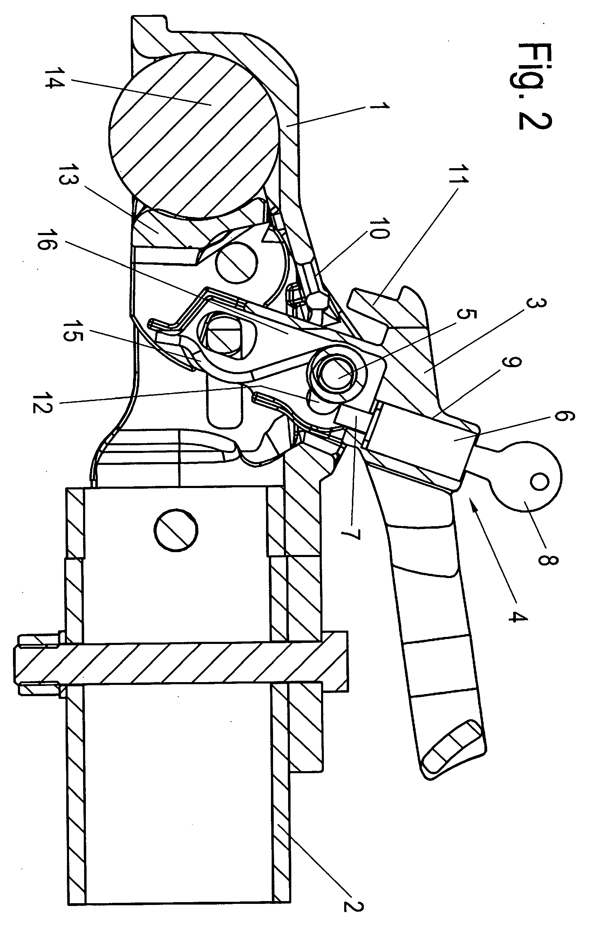

Diese Kugelkopfkupplung weist ein Kupplungsgehäuse 1 auf, an dem ein Handgriff 3 schwenkbar gelagert ist, wozu in dem Kupplungsgehäuse 1 ortsfest ein Querbolzen 5 gehalten ist, um den der Handgriff 3 schwenkbar ist, wobei der Querbolzen 5 in Langlöchern 12 geführt ist, die in sich gegenüberliegenden Schenkeln 16 des Handgriffs 3 vorgesehen sind. Auf dem Querbolzen 5 ist eine Schenkelfeder 15 positioniert, die sich an zumindest einem Schenkel 16 abstützt und mit der der Handgriff 3 in einer Schließstellung (Figur 2) gehalten wird.

An der einer Kugelpfanne 13 der Kugelkopfkupplung zugewandten Vorderseite des Handgriffs 3 ist ein Sicherungszapfen 11 angeformt, der in einer Endstellung des Handgriffs 3 in ein im Kupplungsgehäuse 1 vorgesehenes Loch 10 eintaucht.

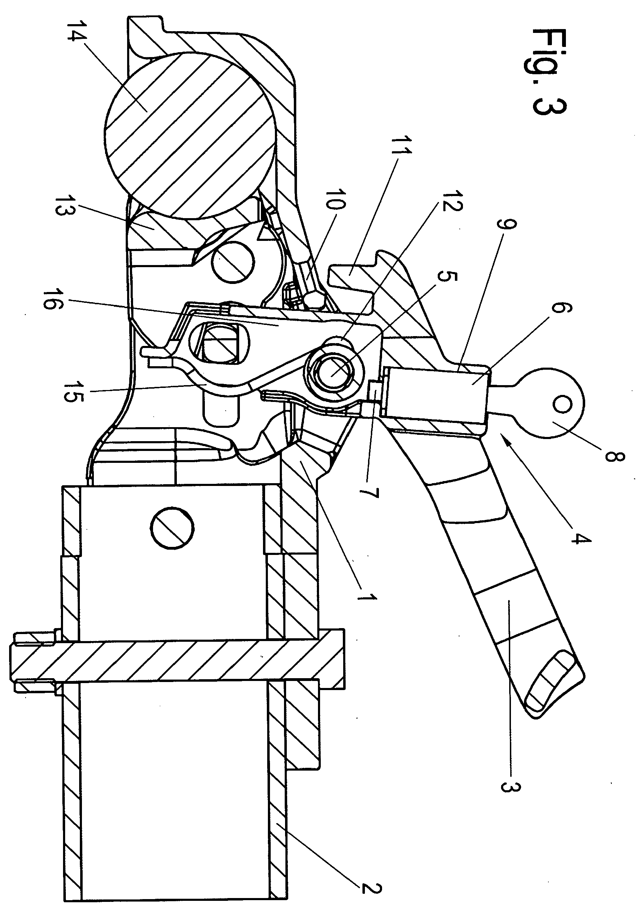

In Figur 3 ist hingegen eine halb geöffnete Stellung erkennbar, in der zum einen die Kugelpfanne 13 eine einliegende fahrzeugseitige Kugel 14 noch nicht frei gibt und zum andern der Sicherungszapfen 11 noch nicht vollständig in das Loch 10 eingetaucht ist. Erst bei einem weiteren Verschwenken des Handgriffs 3 erfolgt die vollständige Öffnung der Kugelpfanne 13, die mit dem Handgriff 3 korrespondiert.

Im Handgriff 3 ist ein Steckschloss 4 angeordnet, mit dem der Handgriff 3 in Schließstellung der Kugelpfanne 13 blockierbar ist, wie dies in der Figur 2 dargestellt ist.

Das Steckschloss 4 ist mit einem Schlossgehäuse 6 in einer senkrecht zur Längsachse des Kupplungsgehäuses 1 verlaufenden, der Oberseite des Kupplungsgehäuses 1 zugewandten Bohrung 9 unverlierbar gehalten, wobei diese Bohrung 9 als Stufenbohrung ausgebildet ist.

Ein Schließbolzen 7 des Steckschlosses 4 ragt in Blockierstellung in einen der Kugelpfanne 13 abgewandten hinteren, dem Querbolzen 5 zugeordneten Bereich derart, dass durch Anlage des Schließbolzens 7 am Querbolzen 5 beim Versuch den Handgriff 3 hochzuschwenken, der Schließbolzen 7 am Querbolzen 5 anliegt, so dass eine Relativbewegung des Handgriffs 3 zum Querbolzen 5 im Langloch 12 nicht möglich ist.

Erst nach einem Entriegeln mittels eines Schlüssels 8 wird der Schließbolzen 7 aus seiner Blockierstellung gezogen, so dass der Handgriff 3 ungehindert entlang des Querbolzens 5 verschwenkt werden kann, wie dies in der Figur 3 erkennbar ist. Dabei kann der Schlüssel 8 im Steckschloss 4 verbleiben, wobei jedoch dessen Unverlierbarkeit gesichert sein sollte.

### Bezugszeichenliste

- 1: Kupplungsgehäuse
- 2: Anhängerdeichsel
- 3: Handgriff
- 4: Steckschloss
- 5: Querbolzen
- 6: Schlossgehäuse
- 7: Schließbolzen
- 8: Schlüssel
- 9: Bohrung
- 10: Loch
- 11: Sicherungszapfen
- 12: Langloch
- 13: Kugelpfanne
- 14: Kugel
- 15: Schenkelfeder
- 16: Lasche

## Patentansprüche

1. Kugelkopfkupplung, die durch einen an einem Kupplungsgehäuse (1) um einen daran befestigten Querbolzen (5) schwenkbar gehaltenen, mittels eines Steckschlosses (4) blockierbaren Handgriff (3) betätigbar ist, wobei der Querbolzen (5) in Langlöchern (12) des Handgriffs (3) geführt ist, und wobei das Steckschloss (4) in einer senkrecht zur Längsachse des Kupplungsgehäuses (1) verlaufenden und dessen Oberseite zugewandten Bohrung (9) des Handgriffs (3) gehalten ist, **dadurch gekennzeichnet, dass** ein Schließbolzen (7) des Steckschlosses (4) in Blockierstellung den Querbolzen (5) derart hintergreift, dass eine Schwenkbewegung des Handgriffs (3) um den Querbolzen (5) blockiert ist.

2. Kugelkopfkupplung nach Anspruch 1, bei der am Handgriff (3) ein Sicherungszapfen (11) vorgesehen ist, **dadurch gekennzeichnet, dass** der Schließbolzen (7) in Blockierstellung auf der dem Sicherungszapfen (11) gegenüberliegenden Seite des Querbolzens (5) in das Kupplungsgehäuse (1) ragt.

3. Kugelkopfkupplung nach Anspruch 1 oder 2, **dadurch gekennzeichnet, dass** das Steckschloss (4) unverlierbar in der Bohrung (9) gehalten ist.

4. Kugelkopfkupplung nach einem der vorhergehenden Ansprüche, **dadurch gekennzeichnet, dass** das Steckschloss (4) mit einem Schlossgehäuse (6) in die Bohrung (9) eingepresst oder durch Verstiften, Verstemmen oder dergleichen darin gehalten ist.

5. Kugelkopfkupplung nach einem der vorhergehenden Ansprüche, **dadurch gekennzeichnet, dass** die Bohrung (9) als Stufenbohrung ausgebildet ist, an deren Grund das Schlossgehäuse (6) anliegt.

6. Kugelkopfkupplung nach einem der vorhergehenden Ansprüche, **dadurch gekennzeichnet, dass** das Steckschloss (4) bündig mit dem oberen Rand der Bohrung (9) abschließt.

7. Kugelkopfkupplung nach einem der vorhergehenden Ansprüche, **dadurch gekennzeichnet, dass** die freie Seite des Steckschlosses (4) in Blockierstellung des Handgriffs (3) und bei abgezogenem Schlüssel (8) von einer Kappe überdeckt ist, die unverlierbar am Handgriff (3) gehalten ist.

## Claims

1. A ball coupling, which can be actuated by means of a handle (3) which is pivotably retained on a coupling housing (1) about a cross bolt (5) attached thereto and which can be blocked by means of a key lock (4), wherein the cross bolt (5) is guided in slots (12) of the handle (3), and wherein the key lock (4) is retained in a borehole (9) of the handle (3) which extends perpendicularly to the longitudinal axis of the coupling housing (1) and faces its upper side, **characterized in that** a closing bolt (7) of the key lock (4) engages behind the cross bolt (5) in the blocking position in such a way that a pivoting movement of the handle (3) around the cross bolt (5) is blocked.

2. A ball coupling according to claim 1, in which a securing pin (11) is provided on the handle (3), **characterized in that** the closing pin (7) protrudes in the blocking position into the coupling housing (1) on the side of the cross bolt (5) which is opposite the securing pin (11).

3. A ball coupling according to claim 1 or 2, **characterized in that** the key lock (4) is captively retained in the borehole (9).

4. A ball coupling according to one of the preceding claims, **characterized in that** the key lock (4) is pressed with a lock housing (6) into the borehole (9) or is retained therein by pinning, caulking or the like.

5. A ball coupling according to one of the preceding claims, **characterized in that** the borehole (9) is formed as a stepped borehole, with the lock housing (6) resting on the base thereof.

6. A ball coupling according to one of the preceding claims, **characterized in that** the key lock (4) is flush with the upper edge of the borehole (9).

7. A ball coupling according to one of the preceding claims, **characterized in that** the free side of the key lock (4) is covered by a cap in the blocking position of the handle (3) and when the key (8) is withdrawn, which cap is captively retained on the handle (3).

## Revendications

1. Accouplement à rotule pouvant être actionné par une poignée (3) montée pivotante sur un boîtier d'accouplement (1), autour d'un goujon transversal (5) fixé sur ce boîtier et pouvant être bloquée au moyen d'une serrure enfichable (4), le goujon transversal (5) passant dans des perçages longitudinaux (12) de la poignée (3) et la serrure enfichable (4) étant maintenue dans un perçage (9) de la poignée (3) s'étendant perpendiculairement à l'axe longitudinal du boîtier d'accouplement (1) et tourné vers sa face supérieure,
**caractérisé en ce qu'**
un goujon de fermeture (7) de la serrure enfichable (4) vient en prise dans la position de blocage derrière le goujon transversal (5) de façon à bloquer le pivotement de la poignée (3) autour du goujon transversal (5).

2. Accouplement à rotule conforme à la revendication 1, dans lequel il est prévu un tourillon d'arrêt (11) sur la poignée (3),
**caractérisé en ce que**
dans la position de blocage le goujon de fermeture (7) pénètre dans le boîtier d'accouplement (1) sur le côté du goujon transversal (5) situé à l'opposé du tourillon d'arrêt (11).

3. Accouplement à rotule conforme à la revendication 1 ou 2,
**caractérisé en ce que**
la serrure enfichable (4) est retenue dans le perçage (9) de façon à ne pas pouvoir être égarée.

4. Accouplement à rotule conforme à l'une des revendications précédentes,
**caractérisé en ce que**
la serrure enfichable (4) est introduite à force dans le perçage (9) par un boîtier de serrure (6), ou est maintenue dans ce boîtier par matage, goupillage ou similaire.

5. Accouplement à rotule conforme à l'une des revendications précédentes,
**caractérisé en ce que**
le perçage (9) est réalisé sous la forme d'un perçage à gradins sur la base duquel s'applique le boîtier de serrure (6).

6. Accouplement à rotule conforme à l'une des revendications précédentes,
**caractérisé en ce que**
la serrure enfichable (4) se connecte à fleur du bord supérieur du perçage (9).

7. Accouplement à rotule conforme à l'une des revendications précédentes,
**caractérisé en ce que**
dans la position de blocage de la poignée (3) et lorsque la clef (8) est tirée, le côté libre de la serrure enfichable (4) est recouvert par un capuchon qui est maintenu sur la poignée (3) de façon à ne pas pouvoir être égaré.
